# EUROPEAN PATENT APPLICATION

(11) **EP 3 954 975 A1**
(43) Date of publication of application: **16.02.2022**
(21) Application number: 21189259.1
(22) Date of filing: 03.08.2021
(51) Int. Cl.: G01H 3/06, G01H 3/14, G01M 7/00, G01M 15/12

(54) **MONITORING DEVICE, SOUND COLLECTING DEVICE, AND MONITORING METHOD**

(30) Priority: 11.08.2020 JP 2020135536
(71) Applicant: JTEKT Corporation, Kariya-shi Aichi-ken, 448-8652 (JP)
(72) Inventor: STOIMENOV, Boyko, Kariya-shi,, 448-8652 (JP); NOZAKI, Mikio, Kariya-shi,, 448-8652 (JP)
(74) Representative: Winter, Brandl - Partnerschaft mbB

(57) **Abstract**

A monitoring device (1) that monitors a target area includes: a sound collecting device in which a plurality of microphones (110) that converts sound waves emitted from the target area to a sound pressure signal is arranged; and an information processing device (12) configured to detect an abnormality in the target area based on the sound pressure signal. The sound pressure signal is a signal of sound waves with a frequency of 20 kHz or higher.

## Description

### BACKGROUND OF THE INVENTION

### 1. Field of the Invention

The invention relates to a monitoring device that monitors a target area, a sound collecting device, and a monitoring method of a monitoring device.

### 2. Description of Related Art

Techniques for diagnosing an abnormality of equipment based on sound emitted from the equipment are known. For example, Japanese Unexamined Patent Application Publication No. 2013-200144 (JP 2013-200144 A) discloses a technique for performing various processes such as a fast Fourier transform on a signal from a sound collector and performing learning and diagnosis with sampled values. Japanese Unexamined Patent Application Publication No. 2001-151330 (JP 2001-151330 A) discloses a technique for using a nondirectional microphone and a directional microphone in a belt conveyor abnormality diagnosis device.

Japanese Unexamined Patent Application Publication No. 2017-32488 (JP 2017-32488 A) discloses a technique for identifying a two-dimensional position of a sound source from which an abnormal sound has been generated using a microphone array in which sound collecting elements are two-dimensionally arranged. In JP 2017-32488 A, a sound source position of an abnormal sound is identified based on a position of a sound collecting element of which an arrival time of the abnormal sound is shortest or a sound collecting element which has detected an abnormal sound most strongly. An equipment unit which is a sound source in which the abnormal sound has been emitted is identified based on an equipment map associated with a two-dimensional layout of equipment and the sound source position.

Japanese Unexamined Patent Application Publication No. 2013-15468 (JP 2013-15468 A) discloses a technique for extracting an abnormal area using a sound collecting device to which a plurality of microphones is attached at equal intervals. In JP 2013-15468 A, a plurality of virtual screens is set, the virtual screens are partitioned in a lattice shape, and a sound pressure level for each lattice point is calculated by performing a beam forming process on a sound pressure signal acquired from the sound collecting device. Then, by comparing the sound pressure level with a reference sound pressure level, an abnormal sound-pressure area is extracted from the plurality of lattice points.

### SUMMARY OF THE INVENTION

When equipment is monitored using a plurality of microphones, there is a problem in a decrease in monitoring accuracy due to noise. For example, machine sound (noise) which is emitted around equipment to be monitored in addition to sound which is emitted from the equipment may be input to the microphones. In the related art, a signal of sound to be monitored is extracted from sound pressure signals acquired from a plurality of microphones by performing a beam forming process on the sound pressure signals.

However, when a direction from the equipment to be monitored to a microphone and a direction from a source of noise to the microphone become the same (that is, when the source of noise is located immediately behind the equipment to be monitored as viewed from the microphone), a signal of noise is extracted along with a signal of sound to be monitored even through the beam forming process and thus the noise cannot be removed.

Therefore, the invention provides a monitoring device that monitors a target area based on sound waves, a sound collecting device, and a monitoring method of the monitoring device for the purpose of more accurate monitoring.

According to a first aspect of the invention, there is provided a monitoring device. The monitoring device monitors a target area. The monitoring device includes: a sound collecting device in which a plurality of microphones that converts sound waves emitted from the target area to a sound pressure signal is arranged; and an information processing device configured to detect an abnormality in the target area based on the sound pressure signal. The sound pressure signal is a signal of sound waves with a frequency of 20 kHz or higher.

With this configuration, noise which could not be removed in the related art can be reduced by distance decay by setting a sound frequency range in which detection of an abnormality is performed to an ultrasonic frequency range (20 kHz or higher). As a result, it is possible to more accurately perform monitoring.

In the monitoring device, at least one of the sound collecting device and the information processing device may include a filter unit. The filter unit may be configured to perform one of removal and reduction of a second sound pressure signal based on the sound waves with a frequency lower than 20 kHz. With this configuration, it is possible to detect an abnormality in a state in which a sound pressure signal based on sound waves with a frequency lower than 20 kHz at which distance decay is relatively small is removed or reduced. As a result, it is possible to more accurately perform monitoring.

In the monitoring device, the plurality of microphones may be arranged in a hexagonal array. The plurality of microphones which is located on an outermost circumference of the array may be positioned on sides and vertices of a regular hexagon. With this configuration, it is possible to broaden a maximum beam scanning angle in the sound collecting device while using a signal in an ultrasonic frequency range for detection of an abnormality. As a result, it is possible to further improve monitoring performance.

In the monitoring device, the plurality of microphones may be arranged in a hexagonal array. The plurality of microphones which is located on an outermost circumference of the array may be positioned on vertices of a regular hexagon. With this configuration, it is possible to broaden a maximum beam scanning angle in the sound collecting device while using a signal in an ultrasonic frequency range for detection of an abnormality. As a result, it is possible to further improve monitoring performance.

In the monitoring device, the plurality of microphones may be configured to convert combined sound waves in which the sound waves emitted from the plurality of target areas are combined to the sound pressure signals. The information processing device may include: a storage device configured to store map information on positions of the plurality of target areas relative to the sound collecting device; and an arithmetic operation device including an extraction unit configured to extract a specific sound pressure signal for each of the plurality of target areas from the sound pressure signals by performing a beam forming process on the sound pressure signals based on the map information and a detection unit configured to detect the abnormality of the corresponding target area based on the specific sound pressure signal.

With this configuration, even when the number of target areas to be monitored increases, a corresponding target area can be added to the monitoring by increasing the number of target areas included in the map information. Accordingly, it is not necessary to add a sound collecting device with an increase in the number of target areas and it is possible to curb complication of the monitoring device. With the monitoring device according to the invention, since the beam forming process is performed based on the map information, an area which is subjected to the beam forming process can be restricted to an area to be monitored (an area in which an abnormality is to be detected). Accordingly, it is possible to shorten a processing time for the beam forming process. As a result, it is possible to perform monitoring in real time.

In the monitoring device, the arithmetic operation device may be configured to fix a beam forming direction to a direction from each of the plurality of target areas determined based on the map information to the sound collecting device and to perform the beam forming process. With this configuration, it is possible to reduce the number of directions in which the beam forming process is performed to the number of target areas in which occurrence of an abnormality is predicted and to reduce an operational load of the beam forming process.

According to a second aspect of the invention, there is provided a sound collecting device. The sound collecting device is used for a monitoring device that monitors a target area. The sound collecting device includes a plurality of microphones that converts sound waves with a frequency of 20 kHz or higher emitted from the target area to a sound pressure signal. The plurality of microphones is arranged in a hexagonal array. The plurality of microphones which is located on an outermost circumference of the array is positioned on sides and vertices of a regular hexagon. With this configuration, since a signal in an ultrasonic frequency range can be used for detection of an abnormality, it is possible to more accurately perform monitoring. Since the maximum beam scanning angle in the sound collecting device can be broadened, it is possible to further improve monitoring performance.

According to a third aspect of the invention, there is provided a monitoring method of a monitoring device. The monitoring device includes a sound collecting device in which a plurality of microphones is arranged and an information processing device, and is configured to monitor a target area using the sound collecting device. The monitoring method includes: acquiring sound waves emitted from the target area using the plurality of microphones in a state in which the sound waves have been converted to a sound pressure signal; and detecting an abnormality in the target area based on the sound pressure signal using the information processing device. The sound pressure signal is a signal of sound waves with a frequency of 20 kHz or higher.

With this configuration, noise which could not be removed in the related art can be reduced by distance decay by setting a sound frequency range in which detection of an abnormality is performed to an ultrasonic frequency range (20 kHz or higher). As a result, it is possible to more accurately perform monitoring.

According to the invention, it is possible to provide a monitoring device that monitors a target area based on sound waves, a sound collecting device, and a monitoring method of a monitoring device, and thus to more accurately perform monitoring.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram schematically illustrating a monitoring device according to an embodiment;
FIG. 2 is a diagram illustrating an example of map information according to the embodiment;
FIG. 3 is a flowchart illustrating a routine of a monitoring process according to the embodiment;
FIG. 4 is a diagram illustrating an array of a plurality of microphones according to the embodiment;
FIG. 5 is a table illustrating conditions and results of simulation;
FIG. 6 is a table illustrating conditions and results of simulation;
FIG. 7A is a diagram illustrating a configuration of a sound collecting device under Condition 1;
FIG. 7B is a diagram illustrating a configuration of a sound collecting device under Conditions 2 and 3;
FIG. 7C is a diagram illustrating a configuration of a sound collecting device under Condition 4; and
FIG. 7D is a diagram illustrating a configuration of a sound collecting device under Condition 5.

### DETAILED DESCRIPTION OF EMBODIMENTS

### Embodiment

Hereinafter, an embodiment of the invention will be described with reference to the accompanying drawings.

"Sound waves" in this disclosure refers to elastic waves that propagate through a medium (for example, a gas, a liquid, or a solid). Sound waves include ultrasonic waves (equal to or higher than 20 kHz) and infrasonic waves (lower than 20 Hz) in addition to sound waves of frequencies which human beings can hear (equal to or higher than 20 Hz and lower than 20 kHz).

### Configuration of monitoring device

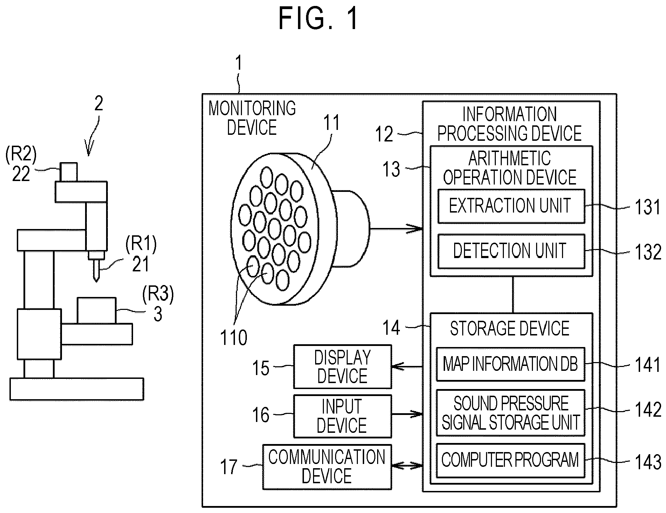

FIG. 1 is a diagram schematically illustrating a monitoring device 1 according to an embodiment. The monitoring device 1 is a device that monitors a plurality of target areas based on sound waves. The monitoring device 1 is installed, for example, at a place in which a processing object (a workpiece) is processed.

A target area in this embodiment includes target areas R1 and R2 in which components of which occurrence of an abnormality is supposed are located and a target area R3 in which a workpiece which is machined by the equipment is located. In the following description, such target areas R1 to R3 are simply referred to as "target areas R" when they are not particularly distinguished.

In this embodiment, as illustrated in FIG. 1, an area in which a tool 21 (for example, a drill) included in a machine tool 2 is located is defined as a target area R1 and an area in which a motor 22 included in the machine tool 2 is located is defined as a target area R2. An area in which a workpiece 3 placed on a work table 23 of the machine tool 2 is located is defined as a target area R3.

The monitoring device 1 includes a sound collecting device 11, an information processing device 12, a display device 15, an input device 16, and a communication device 17. The sound collecting device 11 includes a plurality of microphones 110 which is two-dimensionally arranged. That is, the sound collecting device 11 is a microphone array (a two-dimensional array).

Each microphone 110 is a sound pressure sensor that converts combined sound waves SW2 in which sound waves SW1 emitted from a plurality of target areas R are combined to a sound pressure signal SP1. Particularly, the microphone 110 converts combined sound waves SW2 with a frequency of 20 kHz or higher (that is, ultrasonic waves) to the sound pressure signal SP1. The microphone 110 is, for example, a nondirectional microphone. The array of the microphones 110 will be described later.

The sound collecting device 11 is installed at a position which is separated some distance from the plurality of target areas R. For example, the sound collecting device 11 is installed at a position which is separated several tens of cm to several m from the plurality of target areas R in a state in which it faces the plurality of target areas R. Since the sound collecting device 11 is installed at a position separated a predetermined distance from the plurality of target areas R in this way, combined sound waves SW2 in which sound waves SW1 emitted from the plurality of target areas R are combined can be acquired as well as the sound waves SW1 emitted from a specific target area R.

The information processing device 12 includes an arithmetic operation device 13 and a storage device 14. The information processing device 12 is, for example, a computer device. The storage device 14 is a device that stores various types of information and is, for example, a device including a hard disk drive (HDD), a random access memory (RAM), and a read only memory (ROM).

The storage device 14 functionally includes a map information database 141 and a sound pressure signal storage unit 142. The map information database 141 and the sound pressure signal storage unit 142 are constituted by predetermined storage areas in the storage device 14. The map information database 141 and the sound pressure signal storage unit 142 may be constituted by the same storage area or may be constituted by different storage areas. The storage device 14 additionally stores a computer program 143.

Map information M1 is stored in the map information database 141. The map information M1 is information on positions of a plurality of target areas R relative to the sound collecting device 11.

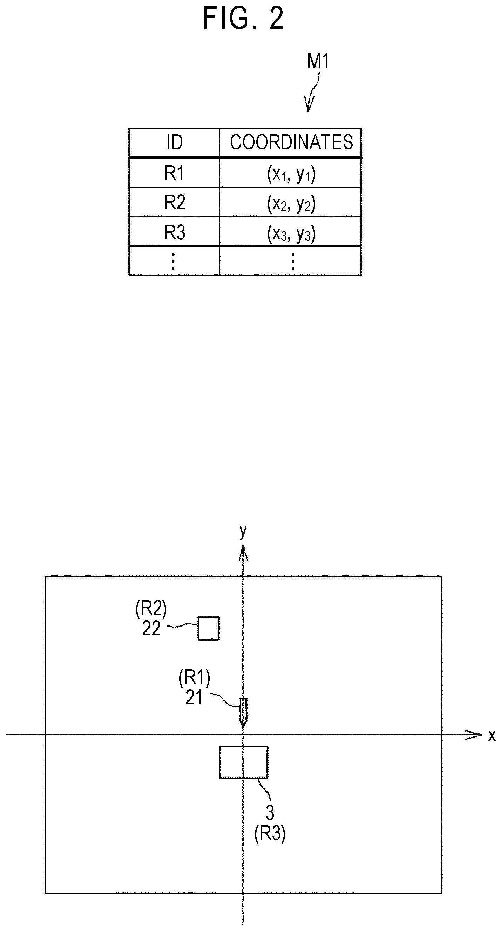

FIG. 2 is a diagram illustrating an example of the map information M1. For example, the map information M1 is stored as information in the form of a table including an ID of a target area R and coordinates of the target area R as illustrated in the upper part of FIG. 2. As the coordinates of the target area R, only central coordinates of the target area R may be stored or coordinates of several points along the outline of the target area R may be stored.

The lower part of FIG. 2 is a diagram schematically illustrating an example of the map information M1 on a predetermined XY plane. The XY plane is a plane which is parallel to a plane (an array surface) on which the plurality of microphones 110 of the sound collecting device 11 is arranged. In other words, the lower part of FIG. 2 represents the positions of the plurality of target area R which are projected onto the predetermined XY plane when the plurality of target areas R is seen in the normal direction of the array surface from the sound collecting device 11. In the lower part of FIG. 2, the outline of each target area R relative to the sound collecting device 11 is represented by coordinates (x, y) with the center of the sound collecting device 11 as an origin.

The map information database 141 may store a plurality of pieces of map information M1. For example, when a plurality of positions (for example, a first position and a second position) of a workpiece 3 is sequentially machined by a machine tool 2, a target area R3 is segmented into machining positions of the workpiece 3, for example, such that a target area R3a is assigned to the first position and a target area R3b is assigned to the second position. Map information M1a including IDs and coordinates of the target areas R1, R2, and R3a and map information M1b including IDs and coordinates of the target areas R1, R2, and R3b may be stored.

Sound pressure signals SP1 acquired by the sound collecting device 11 and a specific sound pressure signal SP2 calculated by the arithmetic operation device 13 are stored in the sound pressure signal storage unit 142.

The arithmetic operation device 13 is a device that reads a computer program 143 from the storage device 14 and performs various operations and is, for example, a central processing unit (CPU). The arithmetic operation device 13 realizes a function of an extraction unit 131 and a function of a detection unit 132 by executing the computer program 143 stored in the storage device 14.

The extraction unit 131 extracts a specific sound pressure signal SP2 for each of a plurality of target areas R from the sound pressure signals SP1 by performing a beam forming process on the sound pressure signals SP1 based on the map information M1. The detection unit 132 detects an abnormality of each target area R based on the specific sound pressure signal SP2. The detailed functions of the extraction unit 131 and the detection unit 132 will be described later.

The display device 15 is electrically connected to the information processing device 12 and displays monitoring information of the target areas R to a user. The display device 15 is, for example, a display and a speaker. For example, the monitoring information includes an abnormality detection result from the detection unit 132 and information on abnormality causes. The input device 16 is electrically connected to the information processing device 12 and transmits information input by a user to the information processing device 12. The input device 16 is, for example, a mouse and a keyboard.

The communication device 17 is electrically connected to the information processing device 12 and transmits and receives various types of information to and from an external device (for example, a management device that manages a plurality of monitoring devices 1) which is not illustrated. For example, the communication device 17 transmits the monitoring information of the target areas R to the management device and receives various types of setting information such as the map information M1 from the management device.

### Routine of monitoring process

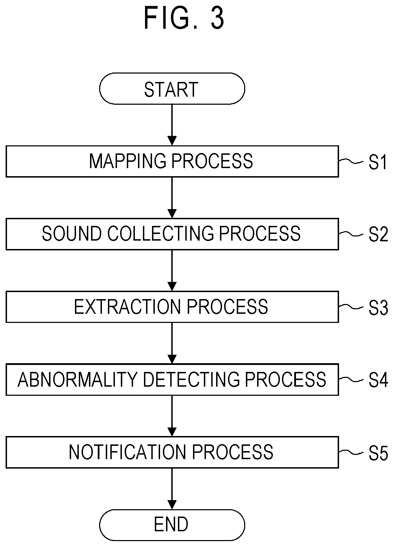

FIG. 3 is a flowchart illustrating a routine of a monitoring process according to the embodiment. When a user of the monitoring device 1 instructs the monitoring device 1 to perform a monitoring process using the input device 16, the monitoring device 1 starts the monitoring process.

When the monitoring process is started, a mapping process S1 is performed first. The mapping process S1 is a process of acquiring map information M1. The sound collecting device 11 and the machine tool 2 are installed at predetermined positions in a factory. A position at which a workpiece 3 is machined by the machine tool 2 is determined in advance. Accordingly, positions of a plurality of target areas R relative to the sound collecting device 11 are uniquely determined.

For example, the map information M1 is acquired by allowing a user to input position information of the target areas R relative to the sound collecting device 11 to the input device 16. In addition, the map information M1 may be acquired by receiving the map information M1 from the management device via the communication device 17. The acquired map information M1 is stored in the map information database 141. In this way, the mapping process S1 ends.

Then, a sound collecting process S2 is performed. The sound collecting process S2 is performed, for example, while the machine tool 2 illustrated in FIG. 1 is operating and machining a workpiece 3. That is, in the sound collecting process S2, the plurality of target areas R generates sound waves SW1 and combined sound waves SW2 in which the sound waves SW1 are combined propagate to the sound collecting device 11.

When the sound collecting process S2 is started, a plurality of microphones 110 included in the sound collecting device 11 converts the input combined sound waves SW2 to sound pressure signals SP1 and outputs the sound pressure signals SP1 to the information processing device 12. Particularly, each microphone 110 converts combined sound waves SW2 with a frequency of 20 kHz or higher to a sound pressure signal SP1. A plurality of sound pressure signals SP1 acquired by the microphones 110 is stored in the sound pressure signal storage unit 142. Since the plurality of microphones 110 is arranged at different positions on a predetermined plane, a distribution of sound pressure signals SP1 can be obtained by acquiring the sound pressure signal SP1 for each of the plurality of microphones 110. With this, the sound collecting process S2 ends.

Then, an extraction process S3 is performed. The extraction process S3 is a process of extracting a specific sound pressure signal SP2 for each of the plurality of target areas R from the sound pressure signals SP1 by causing the extraction unit 131 to perform a beam forming process on the sound pressure signals SP1 based on the map information M1. When the extraction process SP3 is started, a plurality of beam forming processes is performed.

For example, a specific sound pressure signal SP2 for sound waves SW1 propagating in a direction of a target area R1 from the sound pressure signals SP1 is extracted by performing a beam forming process on the sound pressure signals SP1 based on position information of the target area R1 included in the map information M1. Similarly, a specific sound pressure signal SP2 is extracted for each of the target areas R2 and R3. When there are three target areas R, three specific sound pressure signals SP2 are also extracted.

In the extraction process S3, the beam forming process may be performed using different pieces of map information M1a and M1b according to the processes of the machine tool 2. For example, it is assumed that a first machining process of causing the tool 21 of the machine tool 2 to make a hole at a first position of a workpiece 3 and a second machining process of causing the tool 21 of the machine tool 2 to make a hole at a second position other than the first position of the workpiece 3 are sequentially performed. At this time, it is assumed that the second position is not subjected to machining during the first machining process and the first position is not subjected to machining during the second machining process. In this case, it is important to monitor the first position in the first machining process and it is important to monitor the second position in the second machining process.

Accordingly, the beam forming process is performed on the sound pressure signals SP1 acquired in the first machining process based on the map information M1a (the information on the target areas R1, R2, and R3a). Since there are three target areas R, the beam forming process is performed for three directions to calculate the specific sound pressure signal SP2. The beam forming process is performed on the sound pressure signals SP1 acquired in the second machining process based on the map information M1b (the information on the target areas R1, R2, and R3b) for three directions.

That is, in the extraction process S3, a beam forming direction is fixed to a direction from each of the plurality of target areas R to the sound collecting device 11 which is determined based on the map information M1 and the beam forming process is performed. Accordingly, it is possible to narrow the number of directions in which the beam forming process is performed to the number of target areas R in which occurrence of an abnormality is predicted and to decrease an operational load of the beam forming process.

By performing the beam forming process based on a plurality of pieces of map information M1a and M1b in which the target area R in which an abnormality is supposed differs according to processes, it is possible to decrease an operational load of the beam forming process. Accordingly, it is possible to shorten a processing time associated with an arithmetic operation and to perform monitoring in real time. By segmenting a target area of interest by processes, it is possible to easily remove noise from the other areas and to more accurately perform monitoring. In this way, the extraction process S3 ends.

Then, an abnormality detecting process S4 is performed. The abnormality detecting process S4 is a process of causing the detection unit 132 to detect an abnormality of a target area R based on a specific sound pressure signal SP2.

When the abnormality detecting process S4 is started, the detection unit 132 first acquires features included in the specific sound pressure signal SP2 by performing predetermined signal processing on the specific sound pressure signal SP2. For example, a specific sound pressure signal SP2 for the target area R1 includes information on all sound waves SW1 propagating in the direction of the target area R1. The target area R1 is an area for monitoring the tool 21, and an abnormality of the tool 21 appears particularly as a difference in frequency or volume of a swiveling sound of the tool 21. Accordingly, in order to determine whether an abnormality occurs in the tool 21, signal processing (for example, a fast Fourier transform, a filtering process, or calculation of an average sound pressure) is performed on the specific sound pressure signal SP2 acquired from the target area R1 and features (for example, a frequency distribution or an average sound pressure) are acquired.

Then, the detection unit 132 determines whether an abnormality occurs in each of the plurality of target areas R based on the features. For example, whether an abnormality occurs in the target area R1 is determined by comparing a feature of the target area R1 with a predetermined reference value. Determination of an abnormality is performed on the other target areas R2 and R3 in the same way. Particularly, when it is determined that an abnormality has occurred in the target area R3 in which the workpiece 3 is machined, quality of the workpiece 3 may be determined to be poor and the workpiece 3 may be excluded from a fabrication line or the like. That is, the determination of an abnormality according to this embodiment can be used for quality control of the workpiece 3 in addition to monitoring of an abnormality of the machine tool.

Then, when it is determined that an abnormality has occurred in the target area R, the detection unit 132 classifies the abnormality. For example, a feature in the target area R is compared with a plurality of pieces of abnormality information stored in a predetermined database. When there is abnormality information corresponding to the feature in the plurality of pieces of abnormality information, it is determined that the abnormality of the target area R is an abnormality based on the abnormality information. When there is no abnormality information corresponding to the feature in the plurality of pieces of abnormality information, it is determined that it is an unknown abnormality. After the determination, the detection unit 132 adds information on the corresponding abnormality information (for example, information on abnormality causes) to the feature and stores the resultant information in the sound pressure signal storage unit 142. In this way, the abnormality detecting process S4 ends.

Then, a notification process S5 is performed. When the notification process S5 is started, the information processing device 12 outputs monitoring information for each of the plurality of target areas R to the display device 15 based on the abnormality determination result or the information on abnormality causes stored in the sound pressure signal storage unit 142. The information processing device 12 may output the monitoring information to the management device via the communication device 17. When it is determined that an abnormality has occurred in the target area R, an alarm may be output from the speaker of the display device 15. With this, the notification process S5 ends.

As described above, the monitoring device 1 according to this embodiment includes the sound collecting device 11 in which a plurality of microphones 110 that converts combined sound waves SW2 in which sound waves SW1 with a frequency of 20 kHz or higher emitted from a plurality of target areas R are combined to a sound pressure signal SP1 is arranged, the storage device 14 that stores map information M1 on the positions of the plurality of target areas R relative to the sound collecting device 11, and the arithmetic operation device 13 that extracts a specific sound pressure signal SP2 for each of the plurality of target areas R from the sound pressure signals SP1 by performing the beam forming process on the sound pressure signals SP1 based on the map information M1.

With the monitoring device 1, the plurality of target areas R can be monitored using the sound collecting device 11. The sound collecting device 11 is not installed separately in each target area R, but is installed at one position. Accordingly, it is possible to prevent facilities such as wires for providing the sound collecting device 11 from becoming complicated. Even when the number of target areas R to be monitored in a predetermined space increases, an added target area R can be added for monitoring by increasing the number of target areas R included in the map information M1. Accordingly, it is not necessary to add the sound collecting device 11 and it is possible to prevent complication of the monitoring device 1.

With the monitoring device 1, since the beam forming process is performed based on the map information M1, it is possible to limit target areas of the beam forming process to areas to be monitored (areas in which an abnormality is to be detected). Accordingly, it is possible to shorten a processing time for the beam forming process and to shorten a time from acquisition of a sound pressure signal SP1 to extraction of a specific sound pressure signal SP2 or determination of an abnormality. As a result, it is possible to perform monitoring in real time.

### Sound frequency range used for abnormality detection

A sound frequency range which is used for detection of an abnormality will be described below. In the extraction process S3, a signal corresponding to sound waves SW1 emitted from a target area R is extracted from the sound pressure signals SP1 by performing the beam forming process on the sound pressure signals SP1 acquired from the plurality of microphones 110.

However, when a direction from the target area R to the microphone 110 and a direction from a noise source to the microphone are almost equal to each other (that is, when the noise source is located immediately after the target area R in view of the microphone), a signal of noise is extracted along with a signal corresponding to sound waves SW1 emitted from the target area R even by performing the beam forming process and thus the noise cannot be removed.

In order to solve this problem, in this embodiment, each microphone 110 converts combined sound waves SW2 (that is, ultrasonic waves) with a frequency of 20 kHz or higher to the sound pressure signal SP1. An ultrasonic wave has characteristics that it decays more easily than sound waves with audio frequencies which human beings can hear (equal to or higher than 20 Hz and less than 20 kHz) by distance. Accordingly, when detection of an abnormality is performed based on sound waves with a frequency of 20 kHz or higher, noise emitted from a position farther than a target area R as viewed from the microphone 110 decays by distance and the noise is not likely to reach the microphone 110 (or even when the noise reaches the microphone 110, a signal thereof has a smaller intensity than sound waves in an ultrasonic frequency range emitted from the target area R).

In this way, according to the embodiment, noise emitted from immediately after a target area R which could not be removed in the related art can be decreased by distance decay by setting a sound frequency range in which detection of an abnormality is performed to an ultrasonic frequency range (20 kHz or higher).

The configuration for extracting sound waves in an ultrasonic frequency range from sound waves emitted from a target area includes a configuration for extraction using the sound collecting device 11 and a configuration for extraction using the information processing device 12. In the embodiment of the invention, any configuration may be used for extraction. That is, at least one of the sound collecting device 11 and the information processing device 12 has only to include a filter unit that removes or decreases a sound pressure signal based on sound waves with a frequency of less than 20 kHz (corresponding to a second sound pressure signal in the claims).

When sound waves in an ultrasonic frequency range are extracted using the sound collecting device 11, a sensitive area of the microphone 110 may be limited to 20 kHz or higher and only combined sound waves SW2 with a frequency of 20 kHz or higher may be converted to the sound pressure signal SP1. In this case, the sound collecting device 11 has a function (a filter unit) of removing sound waves with a frequency of lower than 20 kHz according to the sensitivity. For example, a signal with a frequency of 20 kHz or higher out of combined sound waves SW2 may be converted to a sound pressure signal SP1 to be stronger than a signal with a frequency of lower than 20 kHz using a microphone 110 in which the sensitivity to sound waves with a frequency of equal to or higher than 20 Hz and lower than 40 kHz is higher than the sensitivity to sound waves with a frequency of equal to or higher than 20 Hz and lower than 20 kHz. In this case, the sound collecting device 11 has a function (a filter unit) of reducing sound waves with a frequency of lower than 20 kHz according to the sensitivity in comparison with sound waves with a frequency of 20 kHz or higher.

The sound collecting device 11 may include an operational amplifier that reduces or removes a sound pressure signal with a frequency of lower than 20 kHz from the sound pressure signal SP1 converted by the microphone 110. In this case, a filter circuit of the operational amplifier corresponds to a filter unit in the claims.

When sound waves in an ultrasonic frequency range are extracted using the information processing device 12, the sound pressure signal SP1 may include a signal with a frequency of lower than 20 kHz. In this case, for example, a signal with a frequency of lower than 20 kHz is removed or reduced by causing the extraction unit 131 to perform a filtering process on the sound pressure signal SP1 and then a specific sound pressure signal SP2 is extracted by performing the beam forming process. Then, the detection unit 132 detects an abnormality based on the specific sound pressure signal SP2. In this case, the extraction unit 131 of the information processing device 12 functions as a filter unit in the claims.

That is, the configuration for removing or reducing a sound pressure signal based on sound waves with a frequency of lower than 20 kHz may be realized by hardware such as a filter circuit of an operation amplifier or may be realized by software such as the extraction unit 131 of the information processing device 12, for example, according to the sensitivity of the microphone 110.

Here, a sign of an abnormality which occurs in a drive portion of the equipment is likely to appear as a high tone. For example, deterioration in lubrication state of a rotary portion (such as bearings) of the device which causes a damage of the rotary portion is likely to appear as sound waves with a frequency of about 30 kHz to 35 kHz. As a sign of air leakage in a portion using compressed air such as a compressor which is another sign of an abnormality, slight turbulence due to small leakage may be generated and generation of the turbulence is likely to appear as sound waves with a frequency of about 35 kHz to 40 kHz. Since a sound of spark discharge is likely to be generated in an ultrasonic frequency range when the spark discharge is small, small spark discharge generated before abnormal spark discharge is generated can be ascertained as a sign of an abnormality with attention paid to sound waves in an ultrasonic frequency range. Out of ultrasonic waves, sound waves with higher tone are more likely to decay by distance. Accordingly, it is preferable that detection of an abnormality be performed based on sound waves with higher tone (for example, equal to or higher than 30 kHz and equal to or lower than 40 kHz) out of sound waves in an ultrasonic frequency range.

### Problem in using sound waves in ultrasonic frequency range

As described above, when a specific sound pressure signal SP2 is extracted based on sound waves in an ultrasonic frequency range and detection of an abnormality is performed based on the specific sound pressure signal SP2, it is possible to reduce noise which is generated from immediately after a target area R. However, when the beam forming process is performed based on sound waves in an ultrasonic frequency range, there is a new problem in that a grating lobe is generated.

In the beam forming process, sound waves are extracted by applying directivity in a specific direction. However, in a microphone array in which a plurality of microphones 110 is arranged, when an interval D1 between neighboring microphones 110 is not equal to or less than half a wavelength λ of a sound wave (that is, when D1>λ/2 is satisfied), a grating lobe with the same directivity gain as in the specific direction is formed due to occurrence of so-called "spatial aliasing." Since it is difficult to distinguish a main lobe which is inherently to be detected and a grating lobe, it is not possible to accurately detect an abnormality when both the main lobe and the grating lobe are extracted by the beam forming process.

For example, since the wavelength λ of an ultrasonic wave with a frequency of 35 kHz is 9.7 mm, the interval D1 between neighboring microphones 110 needs to be set to be equal to or less than 4.9 mm in order to curb occurrence of a graining lobe. However, for example, a diameter of a general condenser microphone is equal to or greater than 6 mm and thus there is a problem in that costs for a smaller microphone are high and sensitivity thereof is low. Accordingly, the interval D1 between the microphones 110 is not easy to set to 4.9 mm or less.

Therefore, in the monitoring device 1 according to this embodiment, an influence of a grating lobe is removed by setting a maximum beam scanning (beam steering) angle in the sound collecting device 11 to be equal to or less than an angle at which the grating lobe is generated. However, when the angle at which the grating lobe is generated is close to an angle at which the main lobe is generated, the maximum beam scanning angle is also decreased and thus an angle range which can be monitored by the monitoring device 1 is decreased. Accordingly, the monitoring device 1 according to this embodiment solves the problem with the maximum beam scanning angle by improving an array of a plurality of microphones 110.

### Array of microphones

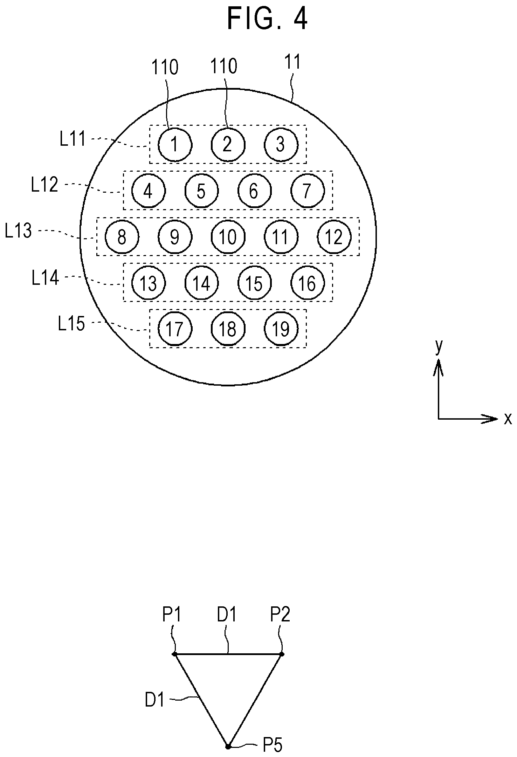

FIG. 4 is a diagram illustrating an array of a plurality of microphones 110. As illustrated in the upper part of FIG. 4, 19 microphones 110 are arranged in a hexagonal array on an array surface of the sound collecting device 11. More specifically, three microphones 110 (microphones 110 of #1, #2, and #3) are arranged at equal intervals in an x direction in a first row L11 located at one end in a y direction. Four microphones 110 (microphones 110 of #4, #5, #6, and #7) are arranged at equal intervals in the x direction in a second row L12 adjacent to the first row L11 on the other side in the y direction. Similarly, five microphones are arranged at equal intervals in the x direction in a third row L13, four microphones are arranged at equal intervals in the x direction in a fourth row L14, and three microphones are arranged at equal intervals in the x direction in a fifth row L15.

As illustrated in the lower part of FIG. 4, the centers of the microphones 110 are located at vertices of a regular triangle. The interval D1 between the centers of the microphones 110 adjacent to each other in the x direction (for example, the centers P1 and P2 of the microphones 110 of #1 and #2) is the same as the interval D1 between the centers of the microphones 110 obliquely adjacent to each other in the y direction (for example, the centers P1 and P5 of the microphones 110 of #1 and #5).

In other words, the centers of the microphones 110 of #5, #6, #9, #11, #14, and #15 are located at vertices of a regular hexagon with a side length of D1, and the center of the microphone 110 of #10 is located at the center of the regular hexagon. The centers of the microphones 110 of #1, #2, #3, #4, #7, #8, #12, #13, #16, #17, #18, and #19 are located at vertices and midpoints of sides of a regular hexagon with a side length which doubles D1 to surround the aforementioned regular hexagon. That is, a plurality of microphones 110 located on an outermost circumference is located at sides or vertices of a regular hexagon.

### Modified examples

While an embodiment of the invention has been described above, the invention can be modified in various forms in addition to the embodiment. Modified examples of the embodiment of the invention will be described below. In the following modified examples, the same elements as in the aforementioned embodiment will be referred to by the same reference signs and description thereof will be omitted.

### Tapering process

The extraction unit 131 may be configured to perform a beam forming process after performing weighting on a sound pressure signal SP1 acquired from each of a plurality of microphones 110. For example, the beam forming process may be performed after weighting a sound pressure signal SP1 detected by the microphone 110 of #10 illustrated in the upper part of FIG. 4 with a largest value, weighting sound pressure signals SP1 detected by the microphones 110 of #1, #2, #3, #4, #7, #8, #12, #13, #16, #17, #18, and #19 located on the outermost circumference with a smallest value, and weighting sound pressure signals SP1 detected by the microphones 110 of #5, #6, #9, #11, #14, and #15 located on vertices of an intermediate regular hexagon with an intermediate value.

In this way, by increasing the influence of the sound pressure signal SP1 detected by the microphone 110 located at the center of the array surface and decreasing the influence of the sound pressure signals SP1 detected by the microphones 110 located on the outermost circumference of the array surface, the size of a side lobe can be decreased relative to the main lobe. Accordingly, it is possible to improve a beam gain, a beam width, and a scanning angle. Particularly, when a hexagonal array is employed, weighting (tapering) can be istropically easily added like the center, a regular hexagon of a first circumference, and a regular hexagon of a second circumference.

### Modified Example 1 employing hexagonal array

The sound collecting device 11 according to the aforementioned embodiment is configured in a hexagonal array in which 19 microphones 110 are arranged in a double regular hexagonal shape as illustrated in the upper part of FIG. 4. However, the array of the microphones 110 is not limited thereto and, for example, the microphones may be arranged in a single regular hexagonal shape or in a triple or more regular hexagonal shape. In this case, a sound collecting device is constituted by a total of 37 microphones 110 including one microphone 110 located at the center, six microphones 110 located on vertices of a hexagon of a first circumference, 12 microphones 110 located on vertices and midpoints of a hexagon of a second circumference, and 18 microphones 110 located on vertices and 1/3 points and 2/3 points of sides of a hexagon of a third circumference (outermost circumference).

That is, when regular hexagons forming a hexagonal array are formed on α circumferences, the number of microphones 110 is [{Σ(6 × i)} + 1]. Here, Σ is an integration of i = α.

### Modified Example 2 employing hexagonal array

In the sound collecting devices 11 according to the embodiment and the modified example, microphones 110 located at some array positions may be omitted as long as isotropy is secured. For example, the microphone 110 may not be arranged at the position of #10 in the upper part of FIG. 4 and the sound collecting device 11 may be constituted by a total of 18 microphones 110. The microphones 110 may not be arranged at the positions of #2, #4, #7, #13, #16, and #18 in the upper part of FIG. 4 and the sound collecting device 11 may be constituted by a total of 13 microphones 110. In this way, when the microphones 110 are arranged at 65% or more of the most array positions of a hexagonal array, the array of the microphones 110 is referred to as a "hexagonal array."

A camera may be provided at a position at which the microphone 110 is not arranged. For example, a camera instead of a microphone 110 may be disposed at the position of #10 in the upper part of FIG. 4.

### Simulation conditions and results

The inventor or the like performed simulation for various sound collecting devices 11 to 11d in which an array of a plurality of microphones differs. Advantages of designs of the sound collecting device 11 were verified using a beam gain, a beam width, and a scanning angle as evaluation items.

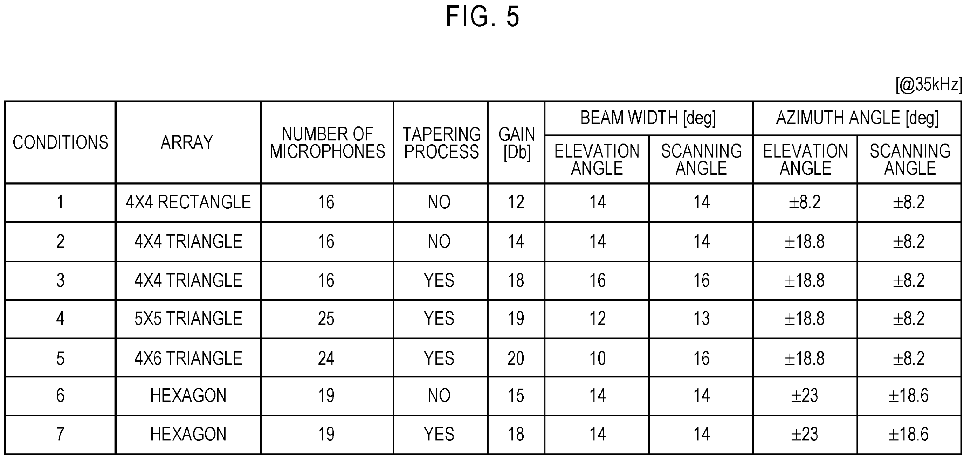

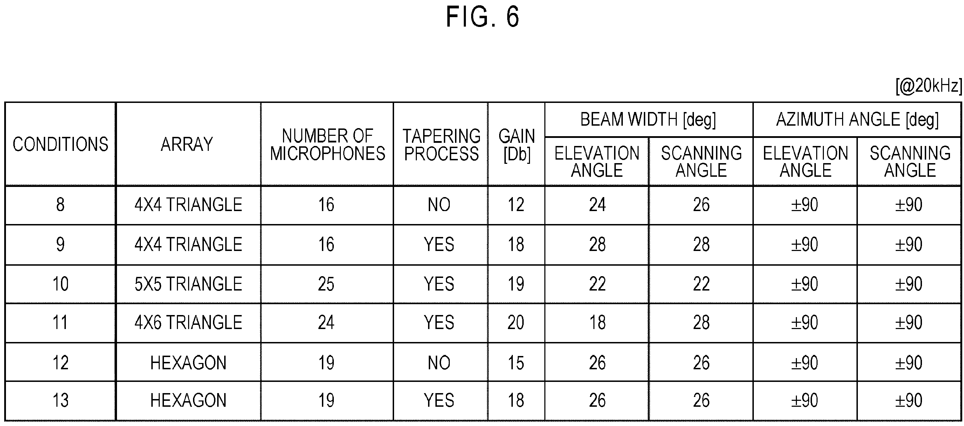

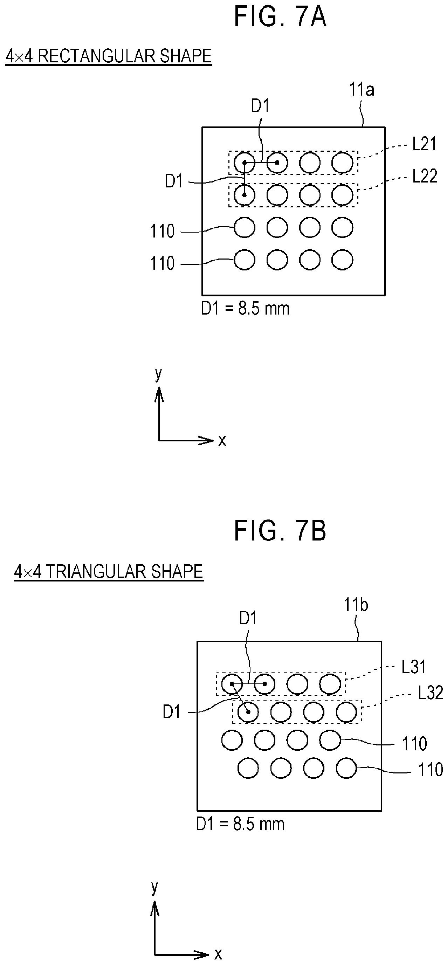

FIGS. 5 and 6 illustrate tables in which conditions used for the simulation performed by the inventor or the like and results thereof are arranged. A sound source emitting sound waves with a frequency of 35 kHz was used in Conditions 1 to 7 illustrated in FIG. 5, and a sound source emitting sound waves with a frequency of 20 kHz was used in Conditions 8 to 13 illustrated in FIG. 6. FIGS. 7A to 7D are diagrams illustrating the configurations of the sound collecting devices 11a to 11d in Conditions 1 to 5 and Conditions 8 to 11 illustrated in FIGS. 5 and 6.

FIG. 7A illustrates an array surface of the sound collecting device 11a (Condition 1). The sound collecting device 11a includes 16 microphones 110 which are arranged in a 4×4 rectangular shape. Four microphones 110 with an inter-center interval D1 are arranged in a first row L21. Four microphones 110 with the inter-center interval D1 in a second row L22 are located just below the four microphones 110 in the first row L21. That is, the centers of the microphones 110 in the sound collecting device 11a are located on vertices of a regular rectangle with a side length D1. In this way, an array in which the centers of the microphones are located on vertices of a regular rectangle is appropriately referred to as a "rectangular array."

FIG. 7B illustrates an array surface of the sound collecting device 11b (Conditions 2, 3, 8, and 9). The sound collecting device 11b includes 16 microphones 110 which are arranged in a 4×4 triangular shape. Four microphones 110 with an inter-center interval D1 are arranged in a first row L31 and a second row L32. Microphones 110 in the second row L32 are located just below the midpoint between two neighboring microphones 110 in the first row L31 with the inter-center interval D1 from the center of the microphones 110 in the first row L31. In other words, the centers of the microphones 110 in the sound collecting device 11b are located on vertices of a regular triangle with a side length D1.

The position in the x direction of the leftmost microphone 110 in the x direction in the third row L33 is the same as the position in the x direction of the leftmost microphone 110 in the x direction in the first row L31, and the position in the x direction of the leftmost microphone 110 in the x direction in the second row L32 is the same as the position in the x direction of the leftmost microphone 110 in the x direction in the fourth row L34. In this way, an array in which the centers of the microphones are located on vertices of a regular triangle and the position in the x direction of a position of a microphone 110 in an a-th row is the same as a position in the x direction of a microphone 110 in an (a+2)-th row is appropriately referred to as a "triangular array."

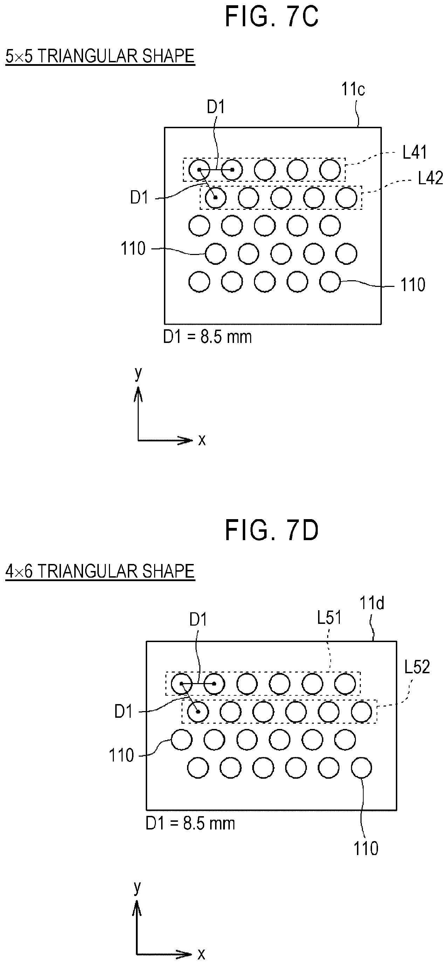

FIG. 7C illustrates an array surface of the sound collecting device 11c (Conditions 4 and 10). The sound collecting device 11c includes 25 microphones 110 which are arranged in a 5×5 triangular shape. Five microphones 110 with an inter-center interval D1 are arranged in a first row L41 and a second row L42.

FIG. 7D illustrates an array surface of the sound collecting device 11d (Conditions 5 and 11). The sound collecting device 11d includes 24 microphones 110 which are arranged in a 4×6 triangular shape. Six microphones 110 with an inter-center interval D1 are arranged in a first row L51 and a second row L52.

In Conditions 6, 7, 12, and 13, the sound collecting device 11 with the hexagonal array illustrated in FIG. 4 was used. In the simulation, the microphones 110 are condenser microphones and a diameter thereof is 1/4 inches (about 6.4 mm). The interval D1 is 8.5 mm. Accordingly, the shortest distance between the outer circumferences of the neighboring microphones 110 is about 2.1 mm.

In the simulation, the sound source is located on a normal line of the array surface extending from the center of the array surface and sound waves with a frequency of 35 kHz (FIG. 5) or 20 kHz (FIG. 6) are emitted from the sound source. In the following description, the direction connecting the sound source and the array surface is appropriately referred to as a "z direction." The z direction is a direction perpendicular to the x direction and the y direction. The beam forming process was performed with a direction of an extracted beam set to the z direction.

In Conditions 3, 4, 5, 7, 9, 10, 11, and 13, a tapering process of weighting sound pressure signals detected by the plurality of microphones 110 was performed in the beam forming process. Specifically, (weighting) factors associated with sound pressure signals of the microphones 110 close to the center out of the plurality of microphones 110 are set to be greater than factors associated with sound pressure signals of the other microphones 110 (for example, the microphones 110 located at ends). It is possible to decrease a side lobe by performing such a tapering process.

Evaluation items will be described below with reference to FIG. 5. It is preferable that the beam gain be as large as possible. In this embodiment, when the gain is equal to or greater than 12 dB, the detection performance is determined to be "acceptable. "

In Conditions 1 to 7, since all the gains are equal to or greater than 12 dB, the detection performance thereof is good in view of the beam gain. Even when the number of microphones 110 is the same, the gain becomes greater as the density of the microphones 110 in the array surface becomes greater as can be seen from the results of Conditions 1 and 2. As can be seen from the results of Conditions 2 and 3, when the array of the microphones 110 is the same, the gain is greater in the condition in which the tapering process is performed. As can be seen from the results of Conditions 3 and 4, when the density of the microphones 110 in the array surface is the same, the gain becomes greater as the number of microphones 110 becomes larger.

However, when the number of microphones 110 increases, there is a problem in that an information processing load in the information processing device 12 increases. In view of a decrease in fabrication cost or a decrease in size of the monitoring device 1, it is preferable that the number of microphones 110 be as small as possible. Accordingly, a condition in which a necessary gain (equal to or greater than 12 dB) can be secured and the number of microphones 110 is smaller can be preferably employed. All of Conditions 1 to 7 are suitable in view of only the gain, but Condition 2 in which the gain is greater with the same number of microphones 110 (16) is more preferable out of Conditions 1 and 2. Out of Conditions 2 to 7, Conditions 2, 3, 6, and 7 in which the number of microphones 110 is slightly less and the necessary gain is secured are more preferable than Conditions 4 and 5. Accordingly, in consideration of both the number of microphones 110 and the beam gain, Conditions 2, 3, 6, and 7 are more preferable.

The beam width is an angle width when a main lobe extracted by the beam forming process decays by 3 dB from a maximum value of the gain. Directionality with high sensitivity in a target direction in which detection is performed is obtained when the beam width is narrow, and it is difficult to localize a target direction in the extracted main lobe when the beam width is wide. Accordingly, it is preferable that the beam width be narrow. Here, an azimuth direction is a direction inclined from the z direction connecting the array surface and the sound source to the x direction, and an elevation angle is a direction which is inclined from the z direction to the y direction. In the simulation illustrated in FIG. 5, when the beam width is equal to or less than 15 degrees in both the azimuth direction and the elevation direction, the detection performance is determined to be "acceptable."

In Conditions 1, 2, 6, and 7, the beam width is 14 degrees in the azimuth direction and 14 degrees in the elevation direction. In Condition 3, the beam width is 16 degrees in the azimuth direction and 16 degrees in the elevation direction. In Condition 4, the beam width is 12 degrees in the azimuth direction and 13 degrees in the elevation direction. In Condition 5, the beam width is 10 degrees in the azimuth direction and 16 degrees in the elevation direction. Accordingly, Conditions 1, 2, 4, 6, and 7 in which the beam width is equal to or less than 15 degrees in the directions are preferable in view of the beam width. Since the beam width in the azimuth direction of Condition 5 is the narrowest out of Conditions 1 to 7 but the beam width in the elevation angle is wide, Condition 5 cannot be said to be preferable.

A scanning angle is a maximum angle range in which sound waves can be extracted without being affected by a grating lobe. In the simulation, since the position of the sound source is known, a position at which the main lobe is generated is known and thus the main lobe and the grating lobe in the simulation result can be separated. In the simulation, the main lobe is generated at a position at which both the azimuth angle and the elevation angle are 0 degrees. Accordingly, an angle at which a closest grating lobe is generated when scanning is performed in both the positive and negative directions from the azimuth angle of 0 degrees is a scanning angle in the azimuth direction. Similarly, an angle at which a closest grating lobe is generated when scanning is performed in both the positive and negative directions from the elevation angle of 0 degrees is a scanning angle in the elevation direction. Since the monitoring device 1 can monitor a broader range as the scanning angle is broader, it is preferable that the scanning angle be broad.

The scanning angle in Condition 1 is ±8.2 degrees in both the azimuth angle and the elevation angle. The scanning angle in Conditions 2 to 5 is ±18.8 degrees in the azimuth angle and ±8.2 degrees in the elevation angle. Since broader scanning is possible in the azimuth angle, Conditions 2 to 5 are more preferable than Condition 1. The scanning angle in Conditions 6 and 7 is ±23 degrees in the azimuth angle and ±18.6 degrees in the elevation angle. Accordingly, the scanning angle in Conditions 6 and 7 is the largest out of Conditions 1 to 7 and thus Conditions 6 and 7 are more preferable out of Conditions 1 to 7. Particularly, Condition 7 in which the gain is greater is more preferable.

As described above, Condition 7 is the most preferable condition in view of the number of microphones 110, the gain, the beam width, and the scanning angle out of Conditions 1 to 7.

The results for sound waves with a frequency of 20 kHz will be evaluated with reference to FIG. 6. As illustrated in FIG. 6, in the results, the scanning angle is ±90 degrees in both the azimuth angle and the elevation angle in Conditions 8 to 13 (that is, the scanning angle is not limited). Accordingly, the conditions make no difference in view of the scanning angle.

Regarding ultrasonic waves with a frequency of 20 kHz (a wavelength λ = 17 mm), the interval D1 between neighboring microphones 110 needs to be equal to or less than 8.5 mm to avoid spatial aliasing and to prevent generation of a grating lobe. On the other hand, since the interval D1 between the microphones 110 in the simulation illustrated in FIG. 6 is 8.5 mm, generation of a grating lobe is prevented in this simulation. Accordingly, the scanning angle is not limited in any condition.

As illustrated in FIG. 6, when the frequency of ultrasonic waves is relatively low, it is possible to prevent generation of spatial aliasing by setting the interval D1 between the microphones 110 to be equal to or less than half the wavelength of the ultrasonic waves. On the other hand, when the frequency of ultrasonic waves is relatively high as illustrated in FIG. 5 (for example, 30 kHz to 40 kHz), it is difficult to mechanically decrease the interval D1 between the microphones 110, generation of spatial aliasing is not prevented, and a grating lobe is generated.

According to the aforementioned embodiment, it is possible to remove an influence of a grating lobe by setting the maximum beam scanning angle in the sound collecting device 11 to be equal to or less than an angle at which the grating lobe is generated. By setting the array of a plurality of microphones 110 to a hexagonal array as illustrated in FIG. 4, it is possible to separate a position at which a grating lobe is generated away from a main lobe and to broaden the maximum beam scanning angle. By employing the hexagonal array, it is possible to efficiently enhance a beam gain with a limited number of microphones 110.

By setting the array of a plurality of microphones 110 to a hexagonal array, it is possible to mount the microphones more densely on the array plane of the sound collecting device 11. Accordingly, it is possible to decrease the size of the sound collecting device 11.

### Others

The aforementioned embodiment is merely an example in all aspects and is not restrictive. That is, the monitoring device according to the invention is not limited to the embodiment illustrated in the drawings and may be modified in various forms within the scope of the invention.

## Claims

1. A monitoring device (1) that monitors a target area, the monitoring device (1) **characterized by** comprising:
a sound collecting device in which a plurality of microphones (110) that converts sound waves emitted from the target area to a sound pressure signal is arranged; and
an information processing device (12) configured to detect an abnormality in the target area based on the sound pressure signal,
wherein the sound pressure signal is a signal of sound waves with a frequency of 20 kHz or higher.

2. The monitoring device (1) according to claim 1, **characterized in that** at least one of the sound collecting device and the information processing device (12) includes a filter unit configured to perform one of removal and reduction of a second sound pressure signal based on the sound waves with a frequency of lower than 20 kHz.

3. The monitoring device (1) according to claim 1 or 2, **characterized in that** the plurality of microphones (110) is arranged in a hexagonal array, and
wherein the plurality of microphones (110) which is located on an outermost circumference of the array is located on sides and vertices of a regular hexagon.

4. The monitoring device (1) according to claim 1 or 2, **characterized in that** the plurality of microphones (110) is arranged in a hexagonal array, and
wherein the plurality of microphones (110) which is located on an outermost circumference of the array is located on vertices of a regular hexagon.

5. The monitoring device (1) according to any one of claims 1 to 4, **characterized in that** the plurality of microphones (110) is configured to convert combined sound waves in which the sound waves emitted from the plurality of target areas are combined to the sound pressure signals, and
wherein the information processing device (12) includes:
a storage device (14) configured to store map information on positions of the plurality of target areas relative to the sound collecting device; and
an arithmetic operation device (13) including an extraction unit (131) configured to extract a specific sound pressure signal for each of the plurality of target areas from the sound pressure signals by performing a beam forming process on the sound pressure signals based on the map information and a detection unit (132) configured to detect the abnormality of the corresponding target area based on the specific sound pressure signal.

6. The monitoring device (1) according to claim 5, **characterized in that** the arithmetic operation device (13) is configured to fix a beam forming direction to a direction from each of the plurality of target areas determined based on the map information to the sound collecting device and to perform the beam forming process.

7. A sound collecting device (11) that is used for a monitoring device (1) that monitors a target area, the sound collecting device **characterized by** comprising:
a plurality of microphones (110) that converts sound waves with a frequency of 20 kHz or higher emitted from the target area to a sound pressure signal,
wherein the plurality of microphones (110) is arranged in a hexagonal array, and
wherein the plurality of microphones (110) which is located on an outermost circumference of the array is located on sides and vertices of a regular hexagon.

8. A monitoring method of a monitoring device (1), the monitoring device (1) including a sound collecting device in which a plurality of microphones (110) is arranged and an information processing device (12) and being configured to monitor a target area using the sound collecting device, the monitoring method **characterized by** comprising:
acquiring, by the plurality of microphones (110), sound waves emitted from the target area in a state in which the sound waves have been converted to a sound pressure signal; and
detecting, by the information processing device (12), an abnormality in the target area based on the sound pressure signal,
wherein the sound pressure signal is a signal of sound waves with a frequency of 20 kHz or higher.
